# EUROPEAN PATENT SPECIFICATION

(11) **EP 3 266 608 B1**
(45) Date of publication and mention of the grant of the patent: **27.02.2019**
(21) Application number: 16461535.3
(22) Date of filing: 07.07.2016
(51) Int. Cl.: B32B 9/02, B32B 9/06, B32B 23/00, B32B 29/00, B32B 9/04

(54) **MULTI-LAYER BIODEGRADABLE LAMINATED STRUCTURES INTENDED FOR THE PRODUCTION ESPECIALLY OF FOOD PACKAGING AND FOOD PACKAGING OBTAINED THEREFROM**
MEHRSCHICHTIGE BIOLOGISCH ABBAUBARE LAMINIERTE STRUKTUREN, DIE BESTIMMT SIND FÜR DIE PRODUKTION INSBESONDERE VON LEBENSMITTELVERPACKUNGEN UND LEBENSMITTELVERPACKUNGEN DARAUS
STRUCTURES STRATIFIÉES BIODÉGRADABLES MULTICOUCHES DESTINÉES À LA FABRICATION NOTAMMENT D'EMBALLAGES ALIMENTAIRES ET EMBALLAGE ALIMENTAIRE OBTENU À PARTIR DE CELLES-CI

(43) Date of publication of application: 10.01.2018
(73) Proprietor: Coffee Service Sp.z o.o., 02-306 Warszawa (PL)
(72) Inventor: Zagrodzki, Adam, 02-306 Warszawa (PL)
(74) Representative: AOMB Polska Sp. z.o.o.

(56) References cited:
- EP-A1- 0 525 708
- WO-A1-90/14938
- WO-A1-2013/173434
- GB-A- 2 452 227
- JP-A- 2003 013 391
- JP-A- 2003 103 692
- JP-A- 2004 188 884
- US-A1- 2001 000 742
- US-A1- 2005 008 801
- US-A1- 2013 122 268

## Description

The object of the invention are multi-layer biodegradable laminated structures intended for the production especially of food packaging and food packaging obtained therefrom. In particular, the present invention includes multi-layer biodegradable laminated structures comprising two layers selected from starch films and cellulose films, with confirmed compostability and/or biodegradability, laminated with a suitable adhesive.

Multi-layer laminated structures are commonly known and widely used, especially but not exclusively in the food packaging industry and are generally used for the production of different types of packaging.

With the increase in worldwide demand for packaging made of plastics, a problem with disposal and recycling of waste generated after their use has emerged.

The majority of plastics currently available on the market, e.g.: PE (polyethylene), PP (polypropylene), PET (polyethylene terephthalate), PA (polyamide) are so-called polymers resulting from polymerisation of simple compounds in the case of PE - polyethylene, and PP - polypropylene. Petroleum and petroleum products are the raw materials used to produce all these simple compounds and eventually the plastics. As is known, these natural resources, one of which is petroleum, are limited, therefore, for some time now, possibilities of replacing these particular raw materials with others are sought after - especially with renewable raw materials which could be used for the production of plastics.

The renewable material is the one the resources of which do not exhaust as it is in a continuous circulation of matter, examples of such material being materials of plant origin, e.g. paper. On the other hand, the biodegradable material is the one which has the ability to biodegrade, that is to decompose biologically - and more particularly a material is considered biodegradable if it is entirely decomposed by microorganisms in soil or in water, without any environmental impact. Such a decomposition relates to materials of plant and animal origin, so-called "organic waste" produced in industry and households, subjected to the process of composting.

Compostability is the most desirable category of biodegradability. Compostability is, very simply, the ability of the segregated product (in this case a plastic) to decompose biologically in industrial and household composting facilities. In addition, compostability is confirmed when a material obtains an appropriate certificate on meeting the standard EN 13432:2000, this certificate being issued by, among others, German organisation DIN CERTCO. The condition for obtaining this certificate is, among others, to confirm that the tested material, under appropriate conditions of composting, will decompose in 90% of its mass within 12 weeks.

Currently, based on information from the market - trade fairs in Poland and Europe - and based on direct talks with customers and customer inquiries, the Applicant undertook preparatory work for the introduction of this type of ready-made packaging from renewable and also biodegradable materials - and thus the most environmentally friendly ones.

In the prior art, biodegradable and compostable food packaging is known. These known multi-layer laminated structures consist essentially of at least two layers laminated together with an adhesive.

For example, from US patent application publication US 5679421A, biodegradable packaging formed from two-layer sheets is known, which comprises an outer layer of kraft paper and an inner layer made of biodegradable thermoplastic material, both shaped and connected together with adhesives biodegradable in composting conditions. The sheets are preferably laminated and connected with a heat-welding technique. The document enumerates preferred biodegradable materials, such as polyvinyl alcohol, hydroxyethyl cellulose, polyethylene glycol, polycaprolactone, polylactic acid, hydroxybutyrate polymer, hydroxyvalerate polymer as well as hydroxybutyrate and hydroxyvalerate copolymers.

From publication WO 2001008881 A3, compostable paper and paperboard coated with a polymer (1), products obtained therefrom and method of their production are known. This publication discloses biodegradable coatings suitable for composting (3), of paper or paperboard (1), consisting of an outer layer (6) comprising polylactide the mass of which is at most about 20 g/m², and a layer of adhesive (7) which is bonded to the outer layer of paper or paperboard (1) and includes a biodegradable polymer coextruded with polylactide. Suitable components of the layer of adhesive (7) are biodegradable polyesters. The products obtained in this way can be used as food packaging and disposable packaging, such as containers for frozen food, disposable drinking cups, sealed cardboard packaging and packaging wraps.

From specification CA2408989C, a method and an apparatus for producing a liquid-impermeable, biodegradable and compostable packaging lined with paper for storing wet food are known, wherein cold adhesives without the use of heat and by extrusion and/or application with dispensing means are used. Cellulose film is preferably used as a lining for the paper, which aims at minimising the loss of permeability of the cellulose film in relation to water vapour and oxygen.

From patent EP 2651642B1, a multi-layer material consisting of a paper substrate is known, wherein at least one cellulose layer is used. The bond between these layers is obtained by means of an adhesive based on water. At least one layer is a barrier to the penetration of water. The obtained multi-layer material substantially consists only of materials based on cellulose or its derivatives, and is therefore suitable for the production of completely biodegradable disposable articles which can be recycled.

From European patent application EP 2917037A1, composite paper-based packaging structures are known which comprise a paper layer and a filler layer which may be laminated or adhere by other means to the paper layer. The composite structure of the paper film may comprise additional layers, such as one or more optional base layers, adhesive layers, a ink layer and/or a sealing layer which may be incorporated into the composite structure of the coating as needed to allow the required functional features of the film composite structure. The composite structure of the paper packaging is essentially suitable for composting and/or to undergo recycling.

From US 2015021753 A1, an environmentally friendly composite film is known which comprises a first cellulose-based film which constitutes a moisture barrier layer; a second cellulose-based film comprising a thin metallic surface, disposed adjacent to the cellulose-based film, bonded with a bio-adhesive disposed between the first and second films; and a third film comprising sugar and/or a corn-based film, disposed adjacent to the second cellulose-based film. All the layers are bio-compostable and/or bio-renewable.

From publication WO 2015183903A2, laminated packaging material is known which is biodegradable under uncontrolled composting conditions, and includes a bio-elastic sealing layer and a compostable barrier layer of cellulose, wherein the barrier layer is bonded to the sealing layer by means of a water-based adhesive in a dry method, wherein the adhesive comprises a hydroxyl or aziridine crosslinking agent and polyurethane or acrylic components at a concentration lower than 0.1% based on dry weight of the packaging material.

US2013122268 discloses a heat-sealable multi-layer compostable structure formed of a first compostable layer of cellulose film, a second compostable hermetically-heat-sealable film, and an intermediate metallised compostable cellulose film disposed between the first and second layers. The layers are laminated trough adhesive layers.

Based on an article on the website of the monthly magazine "Opakowania" dated May 27, 2014, packaging for food and beverages is the largest segments of the packaging market in terms of revenue, wherein PLA and starch-based polymers have dominated the market of packaging made of biodegradable plastics, and solid board and corrugated board have dominated the market of biodegradable paper packaging.

The market of paper packaging is very mature and is characterised by a higher market share of biodegradable packaging than the market of plastic packaging. On the other hand, the market of packaging made of biodegradable plastics is in the initial phase of development and has a huge potential for double-digit growth. Source: MarketsandMarkets.

Currently, there is a greater interest in biodegradable and compostable packaging, and this trend is constantly developing, this is mainly related to the growing awareness of customers/consumers and to the growing interest in food products originating from organic agriculture, so-called BIO/ORGANIC.

Due to the development of the market of organic agricultural products, interest in and need for fully biodegradable packaging, and preferably with a confirmed compostability, have increased.

Therefore, the Applicant undertook preparatory work for the introduction of this type of ready-made packaging from renewable and also biodegradable materials - and thus the most environmentally friendly.

The aim of the present invention was to produce a multi-layer biodegradable laminated structure intended especially for obtaining biodegradable food packaging, comprising at least two or more layers made of materials with confirmed compostability/biodegradability which are selected from paper, cellulose film, metallised cellulose film and starch film, and are laminated together by means of suitable adhesives.

As a result, BIO packaging is achieved with a high level of barrier capacity in relation to water vapour and carbon dioxide, close to the level of barrier capacity of conventional laminates in which PET, PE and PP films are used.

According to the present invention, a multi-layer biodegradable laminated structure, intended for the production especially of packaging for food products, with confirmed compostability and/or biodegradability, laminated by means of a suitable adhesive, is characterised in that it is a two-layer structure including an outer layer of cellulose-based film or metallised cellulose-based film and an inner layer of film based on modified starch, wherein between the layer based on cellulose or layer based on metallised cellulose and the layer based of modified starch, there is a two-component adhesive, especially polyurethane adhesive, with a hardener.

Preferably, in the laminated structure according to the invention, the total content of adhesive does not exceed 5 wt. % of the mass of the laminated structure.

Preferably, the laminated structure according to the invention comprises a cellulose-based film with a thickness of at least 10 µm, more preferably 10-100 µm, and most preferably 20-30 µm.

Preferably, the laminated structure according to the invention comprises a starch-based film with a thickness of at least 20 µm, more preferably 20-150 µm, and most preferably 30-60 µm.

The invention further includes food packaging, especially ready-made flexible packaging of following types: doypack, sachet, gusset pouch, optionally any one containing a biodegradable zip, and made of laminated structure described above according to the invention.

Now, the invention will be presented in greater detail in preferred embodiments, with reference to the accompanying drawings in which:

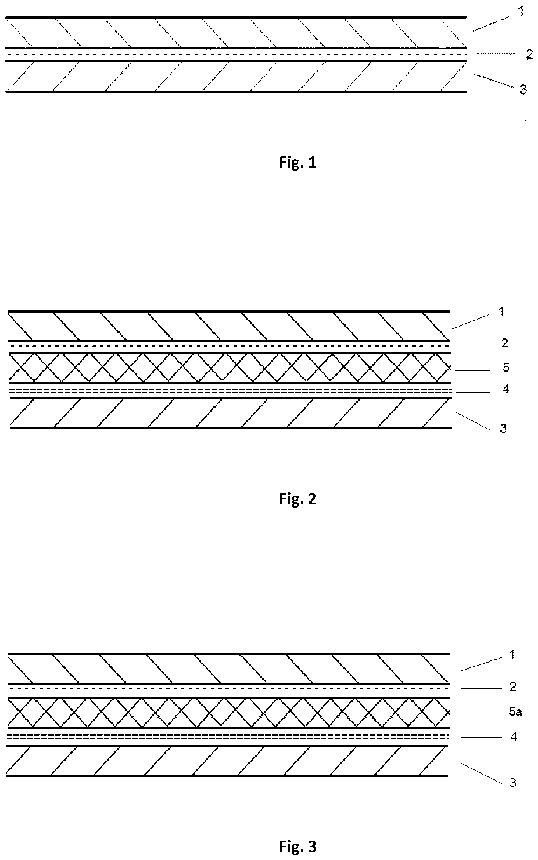

Fig. 1 shows a not-claimed multi-layer structure (so-called BIO) consisting of a layer of paper 1, a layer of adhesive 2 and a layer of film based on modified starch 3; produced as in Example 1 (BIO - PAP40/F30, where PAP40 represents paper with a basis weight of 40 g/ m², and F30 represents a starch-based film with a thickness of 30 µm and BIO - PAP40/F60, where PAP40 represents paper with a basis weight of 40 g/ m², and F60 represents a starch-based film with a thickness of 60 µm);
Fig. 2 shows a not-claimed multi-layer structure (so-called BIO NATURA) consisting of a layer of paper 1, a layer of adhesive 2, a layer of cellulose film 3, a layer of adhesive 4 and a layer of film based on modified starch 5; produced as in Example 2 (BIO NATURA- PAP40/NK20/F30, where PAP40 represents paper of 40 g/ m², NK20 - cellulose-based film with a thickness of 20 µm, and F30 - starch-based film with a thickness of 30 µm and BIO NATURA - PAP40/NK20/F60, where PAP40 represents paper of 40 g/ m², NK20 - cellulose-based film with a thickness of 20 µm, and F60 - starch-based film with a thickness of 60 µm);
Fig. 3 shows a not-claimed multi-layer structure (so-called BIO NATURA MET) consisting of a layer of paper 1, a layer of adhesive 2, a layer of metallised cellulose film 3, a layer of adhesive 4 and a layer of film based on modified starch 5; produced as in Example 3 (BIO NATURA MET - PAP40/NK20met/F30, where PAP40 represents paper of 40 g/ m², NK20met represents a metallised cellulose-based film with a thickness of 20 µm, and F30 represents a starch-based film with a thickness of 30 µm and BIO NATURA MET - PAP40/NK20met/F60, where PAP40 represents paper of 40 g/ m², NK20met represents a metallised cellulose-based film with a thickness of 20 µm, and F60 represents a starch-based film with a thickness of 60 µm);

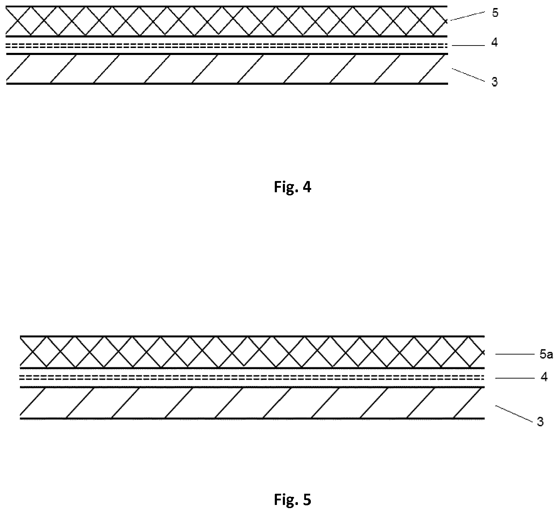

Fig. 4 shows a multi-layer structure (so-called BIO TRANSPARENT) consisting of a layer of cellulose-based film 1, a layer of adhesive 2 and a layer of film based on modified starch 3; produced as in Example 4 (BIO TRANSPARENT- NK20/F30, where NK20 represents a cellulose-based film with a thickness of 20 µm, and F30 represents a starch-based film with a thickness of 30 µm and BIO TRANSPARENT - NK20/F60, where NK20 represents a cellulose-based film with a thickness of 20 µm, and F60 represents a starch-based film with a thickness of 60 µm);
Fig. 5 shows a multi-layer structure (so-called BIO METALIZA) consisting of a layer of metallised cellulose-based film 1, a layer of adhesive 2 and a layer of film based on modified starch 3; produced as in Example 5 (BIO METALIZA - NK20met/F30, where NK20met represents a metallised cellulose-based film with of 20 µm, and F30 represents a starch-based film of 30 µm and BIO METALIZA - NK20met/F60, where NK20met represents a metallised cellulose-based film with a thickness of 20 µm, and F60 represents a starch-based film with a thickness of 60 µm).

In the drawings, the following designations were used: 1 - paper, 2 - one-component polyurethane adhesive, 3 - starch-based film, 4-two-component polyurethane adhesive with a hardener, 5 - cellulose-based film, 5a - metallised cellulose-based film.

### Preferred Embodiment of the Invention

In the embodiments below, the following materials were used for the production of laminates: According to the invention, as an inner layer, a film material of starch origin obtained, e.g., from starch (F30 and F60 - from P.P.H. Folpak Baranowski A. I T. s.c.) was used. The material fulfils its role as a sealed, internal material which will be in direct contact with products - mostly, food products. It has been approved for direct contact with food.

It will be apparent for those skilled in the art that also other starch-based films can be used.

Another material which forms an outer layer of the laminate is a cellulose-based film or a metallised cellulose-based film (NK20, NatureFlex NK film, from Innovia Films, and NK20met, NatureFlex NKME film from Innovia Films, and after the name change, since July 1st, 2016. - Futamura UK Ltd, respectively). For the production of these films, cellulose pulp (of wood origin) subjected to appropriate modifications was used. The largest advantage of these films is their high barrier capacity in relation to gases, including CO₂ (CO₂TR, Carbon Dioxide Transmission Rate, cm³/m² 24h) and to water vapour (WVTR, Water Vapour Transmission Rate, g/m² 24h). CO₂ is a neutral gas used in order to prolong shelf life of food products in packaging.

Furthermore, in the embodiments, the following adhesives were used: Liofol UR 7515 (from Henkel AG&Co. KGaA) - one-component solvent-free polyurethane adhesive designed for paper lamination in the field of food packaging, and Liofol UR 7780/UR 6082 (from Henkel AG&Co. KGaA) - two-component solvent-free polyurethane adhesive designed for lamination of transparent and metallised films in the field of food packaging.

In the production of these packages, the adhesive, having an appropriate sustainability, used to laminate the individual layers of the laminate is important. Therefore, an attempt to produce these laminates using a standard adhesive (Liofol UR 7515, and Liofol UR 7780/UR 6082) the mass of which, in the entire laminate, does not exceed 5% was made.

### Example 1

A technological process for the lamination of laminates shown in Fig. 1 is presented below.
1. The following raw materials of appropriate width were delivered to the production plant: paper with a basis weight of 40 g/ m²,
   starch film F30 (30 µm) and F60 (60 µm) - these films were stored in a dry warehouse at a temperature of 15-25°C, and with a humidity of 25-70%.
2. A layer of paper PAP40 (in this case, gray cellulose paper MG Kraft) was subjected to lamination - during this lamination, (one-component) adhesive Liofol UR 7515 was applied in both examples, onto a layer of film F30 and F60, and the following final products were produced: two-component laminate BIO - PAP40/F30, where PAP40 represents paper with a basis weight of 40 g/ m², and F30 represents a starch-based film with a thickness of 30 µm, and two-component laminate BIO - PAP40/F60, where PAP40 represents paper with a basis weight of 40 g/ m², and F60 represents a starch-based film with a thickness of 60 µm), with a structure as shown in Fig. 1.
3. The resulting laminates were set aside for seasoning for 2-3 days. After the period of seasoning - the laminate is cut to the ordered width and, after checking the parameters of the finished product: basis weight, appearance, is intended for processing into finished packages: doypack, sachet, gusset pouch, which can be available with or without a biodegradable zip.

The obtained products visually corresponded to the requirements imposed, which means that they had a uniform colour and did not contain any blemishes, wrinkles or kinks.

### Example 2

A technological process for the lamination of laminates shown in Figs. 2,3 (not belonging to the invention) and 4,5 (belonging to the invention) is presented below.
1. The following raw materials of appropriate width were delivered to the production plant:
   paper with a basis weight of 40 g/ m²,
   cellulose film NK20 (20 µm),
   metallised cellulose film NKME20 (20 µm),
   starch films F30 (30 µm) and F60 (60 µm) - these films were stored in a dry warehouse at a temperature of 15-25 °C, and with a humidity of 25-70%.
2. First, the lamination (i.e. bonding of layers) of cellulose film NK20 or NKMET20 with starch film F60 or F30 was performed. The (solvent-free) lamination was performed using two-component adhesive UR 7780/UR 6082, where UR 7780 represents an adhesive, and UR 6082 represents a hardener, these two components were mixed in a proportion of 100:40 in a mixer immediately prior to application of the ready mixture onto an adhesive shaft by means of which the adhesive was spread onto one of the layers - the starch or cellulose film, then the two layers were pressed against each other. Thereby, laminate BIO TRANSPARENT NK20/F30 (or F60) having a structure as shown in Fig. 4 or BIO METALIZA NKMET20/F30 (or F60) having a structure as shown in Fig. 5 is produced.
3. The finished laminate is then seasoned for 3-5 days at room temp. of approx. 22-25°C - this consists in hanging the laminate wound onto rolls on hangers - during this time, the laminate is seasoned (the adhesive is cross-linked) -thereby, the laminate which should not delaminate even if a mechanical force is applied is obtained.
4. After the period of seasoning, the laminate is still cut to the ordered width or is intended for another lamination with a layer of paper PAP40 (in this case, gray cellulose paper MG Kraft) - during this lamination, (one-component) adhesive Liofol UR 7515 is applied onto the layer of laminate NK/F from the side of the cellulose film NK and the final product is produced - three-component laminate BIO NATURA PAP40/NK20/F30 (or F60) with a structure as shown in Fig. 2 or BIO NATURA MET PAP40/NKME20/F30 (or F60) with a structure as shown in Fig. 3. This laminate is also set aside for seasoning for 2-3 days. The obtained paper laminates do not belong to the invention.
5. After this period and after checking the parameters of the finished product: basis weight, lamination strength, appearance, the laminates are intended for processing into finished packages of the following types: doypack, sachet, gusset pouch, which can be available with or without a biodegradable zip.

The obtained products visually corresponded to the requirements imposed, which means that they had a uniform colour and did not contain any blemishes, wrinkles or kinks.

Barrier capacity of the finished laminate is a very important factor for long-term storage of most food products. Along with the time of storage of food products, they are exposed to external factors, such as: light, humidity (water vapour), these factors significantly lower the quality and shelf life of food products. For example, in Table 1, parameters of barrier capacity to water vapour for monofilms made of plastics and raw materials used for the production of biodegradable laminates used according to the invention are shown.

For the laminate structures tests were preformed which consisted in checking permeability to water vapour, permeability to CO₂, section modulus of seal, for samples of finished packaging in the form of a bag and in the form of laminates:
BIO PAP40/F30 (or F60) - [paper/starch film] (as in Fig. 1)
BIO NATURA PAP40/NK20/F30 (or F60) - [paper/cellulose film/starch film] (as in Fig. 2)
BIO NATURA MET PAP40/NKME20/F30 (or F60)- [paper/metallised cellulose film/starch film] (as in Fig. 3)
BIO TRANSPARENT NK20/F30 (or F60) - [cellulose film/starch film] (as in Fig. 4)
BIO METALIZA NKMET20/ F30 (or F60) - [metallised cellulose film/starch film] (as in Fig. 5).

Determination of transmission rate of water vapour through the films by means of a humidity sensor was performed according to the standard PN-EN ISO 15106-1:2007, using the following test conditions: conditioning of samples: temperature of 23°C and humidity of 53%, measurement conditions: 38°C, 90% ΔRH. The obtained result of measurement refers to the thickness of the test sample. The results of this test are shown in Table 2 below.

Determination of transmission rate of carbon dioxide through the packaging films was performed according to the standard PN-EN ISO 2556:2002, by means of manometry, using the following test conditions: conditioning of samples: temperature of 23°C and humidity of 53%, measurement conditions: temperature: 23°C, pressure difference: 0.1 Mpa. The obtained result of measurement refers to the thickness of the test sample. The results of this test are shown in Table 2 below.

Determination of tear resistance by means of the Trouser Tear Test according to the Polish standard PN- ISO 6383-1:2005 consisted in determining the average value of force in N and resistance in N/mm that is generated during the tearing, at a rate of 200 mm/min, of the film sample having dimensions of 150 mm x 50 mm with a cut in the centre to a depth of 75 mm. The test is performed in two directions - longitudinal and transverse. Test conditions: temperature of 23°C and humidity of 53%. The results of this test are shown in Table 3 below. Determination of section modulus of seal in the packaging films was performed according to the Polish standard PN-C-89258-1, under the following conditions: temperature of 23°C and humidity of 53%; test speed: 100 mm/min; length of the measurement section L0: 50 mm; sample width: 15 mm; and it was the seal on the right side of the package that was subjected to the test. The results of this test are shown in Table 3 below.

Below, also in Table 3, results for laminates produced by the Applicant before production of the laminates which have the above-mentioned structures and the technical parameters of which did not yield the expected results are also shown for comparison:
N913 55 [cellulose film with a thickness of 55 µm]
PAP40/PLA30 7780/6080 [paper with a basis weight of 40 g/ m²/polylactide with a thickness of 30 µm, two-component polyurethane adhesive with a hardener of Liofol series from Henkel AG&Co.KgaA]
PAP40/PLA30 7732/6048 [paper with a basis weight of 40 g/ m²/polylactide with a thickness of 30 µm, two-component polyurethane adhesive with a hardener of Liofol series from Henkel AG&Co.KgaA]]

**Table 1: Comparison of barrier capacity to water vapour for monofilms made of plastics and raw materials used for the production of biodegradable laminates used according to the invention**

| **No.** | **Type of material** | **Thickness [µm]** | **WVTR [g/m²24h bar]** |
|---|---|---|---|
| 1 | PET | 25 | 40 (38°C, 90% RH) |
| 2 | OPP | 25 | 5 (38°C, 90% RH) |
| 3 | EVOH | 25 | 50 (38°C, 90% RH) |
| 4 | OPA | 25 | 160 (38°C, 90% RH) |
| 5 | PP | 25 | 12 (38°C, 90% RH) |
| 6 | PA | 25 | 40 (38°C, 90% RH) |
| 7 | PE-LD | 25 | 5 (38°C, 90% RH) |
| 8 | PE-HD | 25 | 20 (38°C, 90% RH) |
| 9 | NKME | 20 | 10 (38°C, 90% RH) |
| 10 | NK | 20 | 14 (38°C, 90% RH) |

The table above does not include barrier capacity to water vapour for the other raw materials (paper, F30) due to the fact that these materials do not have any significant effect on barrier capacity of the finished laminate.

**Table 2: Comparison of barrier capacity for CO₂ and to water vapour for exemplary laminates made of plastics and for the biodegradable laminates according to the invention.**

| **No.** | **Type of laminate** | **Thickness [µm]** | **CO₂ [cm³/m²24h]** (23°C, 53% RH) | **WVTR [g/m²24h bar]** (38°C, 90% RH) |
|---|---|---|---|---|
| 1 | PA/PE | 50/40 | 100-130 | 2-3 |
| 2 | OPA/PE | 15/60 | 130-200 | 1.3-1.8 |
| 3 | PET/PE | 12/70 | 220 | 1.5 |
| 4 | BIO TRANSPARENT NK20/F60 | 80 | 65.78 | 12.2 |
| 5 | BIO METALIZA NKMET20/F60 | 80 | 59.25 | 4.53 |

**Table 3. Shows values of selected parameters, i.e. tear resistance of film and section modulus of seal for the obtained products**

| (products belonging to the invention: BIO TRANSPARENT NK20/ F60 and BIO METALIZA NKMET20//F60) | | | | |
|---|---|---|---|---|
| **Tested property** | **Test method** | **Laminates** | **Average result** | |
| | | | **along, N** | **across, N** |
| Tear resistance of the film using Trouser Tear Test | PN-ISO 6383-1:2005 | **Comparative example:** | | |
| | | N913 55 [cellulose] | 0.85 | 2.10 |
| | | PAP/PLA 7780/6080 PAP40/PLA [paper/lactide] | 0.40 | 0.51 |
| - along, N | | PAP/PLA 7732/6048 PAP40/PLA 30 [paper/lactide] | 0.40 | 0.49 |
| - across, N | | BIO PAP40/F60 [paper/cellulose] | 8.00, | 10.12 |
| | | BIO NATURA PAP40/NK20/F60 [paper/cellulose/starch] | 4.99, | 6.41 |
| | | BIO NATURA MET PAP40/NKME20/F60 [paper/metallised cellulose/starch] | 8.74 | 8.33 |
| | | BIO TRANSPARENT NK20/F60 [cellulose/starch] | 3.75 | 11.69 |
| | | BIO METALIZA NKMET20/F60 [metallised cellulose/starch] | 6.96, | 9.90 |
| | | | Max force, N | |
| Section modulus of seal | PN-C-89258-1 | **Comparative example:** | | |
| - max force N | | PAP/PLA 7780/6080 PAP40/PLA [paper/lactide] | 8.86 | |
| | | PAP/PLA 7732/6048 PAP40/PLA 30 [paper/lactide] | 6.87 | |
| | | BIO PAP40/F60 [paper/cellulose] | 16.15 | |
| | | BIO NATURA PAP40/NK20/F60 [paper/cellulose/starch] | 24.84 | |
| | | BIO NATURA MET PAP40/NKME20/F60 [paper/metallised cellulose/starch] | 16.81 | |
| | | BIO TRANSPARENT NK20/F60 [cellulose/starch] | 29.72 | |
| | | BIO METALIZA NKMET20/F60 [metallised cellulose/starch] | 17.28 | |

For example, the higher the value of force N [Newton] (average value along in N and across in N), the better tear resistance it exhibits; the higher the maximum force in N required to break the seal, the better the breaking strength of the package.

### Example 3

Results of the test "Initial evaluation of decomposition of packaging materials under simulated composting conditions in tests on a laboratory scale" according to the standard PN-EN 14806 : 2010 conducted in COBRO (Polish Packaging Research and Development Centre). Sample of laminate BIO NATURA MET - PAP40/NK20met/F30 and finished packaging of Doypack type, BIO NATURA PAP40/NK20/F60 with a biodegradable zip were subjected to composting. A conventional adhesive was used in both trials. The test is conducted for 10 weeks in a special chamber that simulates the conditions during composting and confirms the degree of decomposition according to the assumptions of the standard.

Determination of degree of decomposition of the aforementioned samples was conducted under laboratory conditions similar to the intense aerobic composting process. Waste inoculated with compost obtained from the composting plant was used in the test. Samples of the test material were shredded into fragments having the size of 25x25 mm, and then subjected to composting with waste prepared in the laboratory while maintaining the constant temperature of 58°C, for the period of 66 days. Degree of decomposition was determined after a composting cycle by sieving through meshes of 2 mm in order to separate the residue of the test material which had not decomposed. The loss of mass of the test material indicates the decomposition and was used to calculate the degree of decomposition.

The method conducted on a laboratory scale, used for testing, is intended to stimulate the ambient conditions existing in industrial composting plants, and packaging materials subjected to these conditions may be initially evaluated in this regard.

### Test results

According to PN-EN 14806:2010, the total fraction of packaging material above 2 mm is considered to be the fraction which does not decompose. The material that passed through the sieve is treated as decomposable. Degree of decomposition (D) is calculated according to the formula: D[%]=Mi-Mr/Mi x 100%, where Mi is the initial dry mass of the test material, and Mr is the mass of dry residues recovered by sieving. The results of disintegration tests calculated according to the above formula in the table below. As indicated by the results obtained for all samples tested, the degree of decomposition was 100%, which means that they are characterised by a very good ability to decompose under the composting conditions.

**Table 6 Results of determinations of degree of decomposition:**

| Sample No. | Type of test material | Mi [g] | Mr [g] | Degree of decomposition [%] |
|---|---|---|---|---|
| 1 | Bio Doypack with a zip | 11.05 | 0 | 100 |
| 2 | | 10.48 | 0 | 100 |
| 1 | BIO NATURA MET | 12.3 | 0 | 100 |
| 2 | | 13.94 | 0 | 100 |

Further certification of packaging confirming their compostability can be conducted as it was mentioned earlier in DIN CERTCO. It is quite a long and very expensive procedure connected to additional tests of packaging, chemical analysis of packaging residues after composting. The obtained certificate entitles to provide the packaging with the marking of suitability for composting. The entire project above, on a Polish and European scale, is very innovative mainly because, so far, only a few companies in Europe undertook the production of this type of biodegradable unitary packaging of multi-layer laminate.

Most of the produced biodegradable packaging introduced to the market is packaging made of pure biodegradable polymers, such as PLA (polylactide) - and this packaging was rather dedicated for some single group of food products, e.g. for beverages. On the other hand, our laminates and biodegradable packaging are dedicated for a wide variety of food products: lumpy, powdery ones, etc.

## Claims

1. A multi-layer biodegradable laminated structure, intended for the production especially of food packaging, with confirmed compostability and/or biodegradability, laminated by means of a suitable adhesive, **characterised in that** it is a two-layer structure comprising an outer layer of cellulose-based film (5) or metallised cellulose-based film (5a) and an inner layer of film based on modified starch (3), wherein between the layer based on cellulose (5) or film based on metallised cellulose (5a) and the layer based of modified starch (3), there is a two-component adhesive, especially polyurethane adhesive with a hardener (4), wherein the inner layer is the layer which is suitable to be in direct contact with products, especially food products, during use, and wherein the compostability is measured according to PN-EN 14806:2010 standard.

2. The laminated structure according to claim 1, **characterised in that** the total content of adhesive does not exceed 5 wt. % of the mass of the laminated structure.

3. The laminated structure according to claim 1 or 2, **characterised in that** it comprises a cellulose-based film (5, 5a) with a thickness of at least 10 µm, more preferably 10-100 µm, and most preferably 20-30 µm.

4. The laminated structure according to any one of claims 1 to 3, **characterised in that** it comprises a starch-based film (3) with a thickness of at least 20 µm, more preferably 20-150 µm, and most preferably 30-60 µm.

5. Food packaging, especially ready-made flexible packaging of following types: doypack, sachet, gusset pouch, optionally containing a biodegradable zip, made of laminated structure according to any one of claims 1 to 4.

## Patentansprüche

1. Mehrschichtige biologisch abbaubare laminierte Struktur, die für die Herstellung insbesondere von Lebensmittelverpackungen bestimmt ist, mit bestätigter Kompostierbarkeit und/oder biologischer Abbaubarkeit, laminiert mittels eines geeigneten Klebstoffs, **dadurch gekennzeichnet, dass** es sich um eine zweischichtige Struktur handelt, die eine Außenschicht aus einer Folie (5) auf Basis von Cellulose oder einer metallisierten Folie (5a) auf Basis von Cellulose und eine Innenschicht aus einer Folie auf Basis modifizierter Stärke (3) umfasst, wobei zwischen der Schicht auf Basis von Cellulose (5) oder metallisierter Folie auf Basis von Cellulose (5a) und der Schicht auf Basis von modifizierter Stärke (3) ein Zweikomponenten-Klebstoff, insbesondere Polyurethan-Klebstoff mit einem Härter (4), vorhanden ist, wobei die Innenschicht die Schicht ist, die geeignet ist, während der Verwendung in direktem Kontakt mit Produkten, insbesondere Lebensmitteln, zu stehen, wobei die Kompostierbarkeit nach dem Standard PN-EN 14806:2010 gemessen wird.

2. Laminierte Struktur nach Anspruch 1, **dadurch gekennzeichnet, dass** der Gesamtgehalt an Klebstoff 5 Gew.-% der Masse der laminierten Struktur nicht übersteigt.

3. Laminierte Struktur nach Anspruch 1 oder 2, **dadurch gekennzeichnet, dass** sie eine Folie (5, 5a) auf Basis von Cellulose mit einer Dicke von mindestens 10 µm, vorzugsweise 10-100 µm und am bevorzugtesten 20-30 µm umfasst.

4. Laminierte Struktur nach einem der Ansprüche 1 bis 3, **dadurch gekennzeichnet, dass** sie eine Folie (3) auf Basis von Stärke mit einer Dicke von mindestens 20 µm, vorzugsweise 20-150 µm und am bevorzugtesten 30-60 µm umfasst.

5. Lebensmittelverpackung, insbesondere konfektionierte flexible Verpackung folgender Art: Taypack, Tüte, Seitenfaltenbeutel, optional mit biologisch abbaubarem Verschluss, hergestellt aus laminierter Struktur nach einem der Ansprüche 1 bis 4.

## Revendications

1. Une structure stratifiée biodégradable multicouche, destinée à la production notamment des emballages alimentaires, avec compostabilité et/ou biodégradabilité confirmée, stratifiée au moyen d'un adhésif approprié, **caractérisée en ce qu'**elle est une structure à deux couches comprenant une couche externe de film à base de cellulose (5) ou film à base de cellulose métallisée (5a) et une couche interne de film à base d'amidon modifié (3), dans laquelle entre la couche à base de cellulose (5) ou le film à base de cellulose métallisée (5a) et la couche à base d'amidon modifié (3), il y a un adhésif à deux composants, en particulier un adhésif polyuréthane avec un durcisseur (4), dans laquelle la couche interne est la couche qui convient pour être en contact direct avec des produits, en particulier des produits alimentaires, lors de l'utilisation, dans laquelle la compostabilité est mesurée selon la norme PN-EN 14806:2010.

2. La structure stratifiée selon la revendication 1, **caractérisée en ce que** la teneur totale de l'adhésif ne dépasse pas 5% en poids de la masse de la structure laminée.

3. La structure stratifiée selon la revendication 1 ou 2, **caractérisée en ce qu'**elle comprend un film à base de cellulose (5, 5a) d'une épaisseur d'au moins 10 µm, plus préférablement de 10 à 100 µm et le plus préférablement de 20 à 30 µm.

4. La structure stratifiée selon l'une quelconque des revendications 1 à 3, **caractérisée en ce qu'**elle comprend un film à base d'amidon (3) d'une épaisseur d'au moins 20 µm, plus préférablement de 20 à 150 µm et le plus préférablement de 30 à 60 µm.

5. Des emballages alimentaires, en particulier des emballages flexibles prêts à l'emploi des types suivants : doypack, sachet, pochette à soufflets, contenant éventuellement un zip biodégradable, en structure stratifiée selon l'une quelconque des revendications 1 à 4.
